# EUROPEAN PATENT SPECIFICATION

(11) **EP 2 330 331 B1**
(45) Date of publication and mention of the grant of the patent: **26.09.2018**
(21) Application number: 09178091.6
(22) Date of filing: 04.12.2009
(51) Int. Cl.: F16L 37/56, H01R 13/631

(54) **Coupling device for connector components**
Kopplungsvorrichtung für Verbinderkomponenten
Dispositif de couplage pour composants connecteurs

(43) Date of publication of application: 08.06.2011
(73) Proprietor: Caterpillar Work Tools B. V., 5232 BJ 's-Hertogenbosch (NL)
(72) Inventor: Luyendijk, Joost, 5232 BJ 's Hertogenbosch (NL)
(74) Representative: BRP Renaud & Partner mbB Rechtsanwälte Patentanwälte Steuerberater

(56) References cited:
- WO-A1-2004/073007
- DE-A1- 3 903 839
- DE-A1-102006 023 713
- DE-U1-202004 000 387
- US-A- 2 086 424
- US-A- 4 738 463
- US-A- 4 886 301
- US-B1- 6 390 841

## Description

### Technical Field

This disclosure relates to a device and a method for coupling connectors components in machines, particularly for coupling fluid connectors or cable connectors.

### Background

Corresponding connectors may need to be suitably aligned before their engagement. Alignment of the corresponding connectors may be necessary in order to establish a reliable and, in case of fluid connectors, leak free connection. Suitable alignment of the corresponding connectors may also increase the service life of the components.

EP 1508645 describes a device for coupling and decoupling the ends of hydraulic pressure conduits. The device comprises a movable coupling half-section on a sleigh and a fixed coupling half-section. A piston-cylinder device may be used to move the sleigh supporting the movable coupling half-section and may be used to fix the two coupling half-sections together in the connected position.

The sleigh may not suitably align the coupling half-sections prior to connection.

US 2006022455 describes a hydraulic quick coupling for the coupling of structural components. Quick-coupling parts may be arranged respectively on the structural components. One quick-coupling part may have at least one guide bolt which can engage in a centering bore of the corresponding quick-coupling part. Each quick-coupling part may be provided with coupling plugs or coupling sleeves for the connection of the hydraulic lines. At least one quick-coupling part being arranged movably on one structural component in order to connect or separate the two quick-coupling parts.

The guide bolt and centring bolt arrangement may not suitably align the coupling plugs prior to connection.

US4738463 discloses an assembly for making power connections during the hitching of an implement to a vehicle. Alignment is accomplished by a set of pins which engages a set of holes. The arrangement allows for a degree of axial misalignment.

WO 2006048316 describes a hydraulic coupling having a first coupling part and a second coupling part. One of the two coupling parts may be moved in an axial direction inside a hydraulic cylinder by a piston while the other coupling part may be situated inside a housing. In the coupled state of the coupling parts, relative movement between the two parts may occur. To accommodate the relative movement, a housing may have housing parts also movable through association with respective spherical sliders. The housing parts may carry spherical sliding surfaces formed as ring members in order to make simple assembly possible.

The spherical sliders and the respective spherical sliding surfaces may not assist in the suitable alignment of the coupling parts. Additionally, the spherical sliders and the respective spherical sliding surfaces may also be subjected to the axial load when the coupling parts are connected.

The present disclosure is directed, at least in part, to improving or overcoming one or more aspects of the prior art system.

### Brief Summary of the Invention

In a first aspect, the present disclosure describes a coupling device for coupling connectors in machines, comprising a first support member for supporting a first connector, a second support member for supporting a second corresponding connector, wherein the first and the second support members are arranged for axial coupling of said connectors and at least one of the first and the second support member is provided with at least three floating arrangements for radial displacement thereof.

In a second aspect, the present disclosure provides for a method of coupling connectors in machines, comprising providing at least one of a first and a second support member with at least three floating arrangements for radial displacement thereof, engaging the first support member supporting a first connector to the second support member supporting a second corresponding connector for axial coupling of said connectors and coupling the connectors.

Other features and advantages of the present disclosure will be apparent from the following description of various embodiments, when read together with the accompanying drawings.

### Brief Description of the Drawings

The foregoing and other features and advantages of the present disclosure will be more fully understood from the following description of various embodiments, when read together with the accompanying drawings, in which:
Fig. 1 is an isometric view of a coupling device according to the present disclosure for coupling connectors;
Fig. 2 is a side view of a coupling device according to the present disclosure for coupling connectors;
Fig. 3 is a perspective view of an embodiment of a floating arrangement of the coupling device according to the present disclosure;
Fig. 4 is a cross-section of the coupling device as shown in Fig. 2 along line II - II;
Fig. 5 is a cross-section of the coupling device as shown in Fig. 2 along line V - V; and

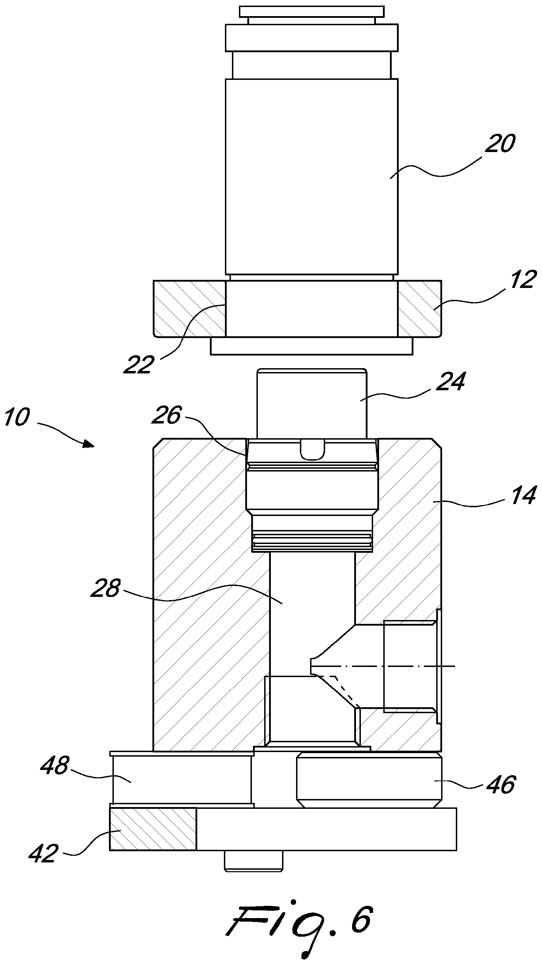

Fig. 6 is a cross-section of the coupling device as shown in Fig. 2 along line VI - VI.

### Detailed Description

This disclosure generally relates to coupling device **10** for coupling of connectors, particularly to remotely establish a hydraulic connection between worktool and carrier.

The coupling device **10** may comprise an alignment member **12,** a bracket **14** and floating arrangements **16.**

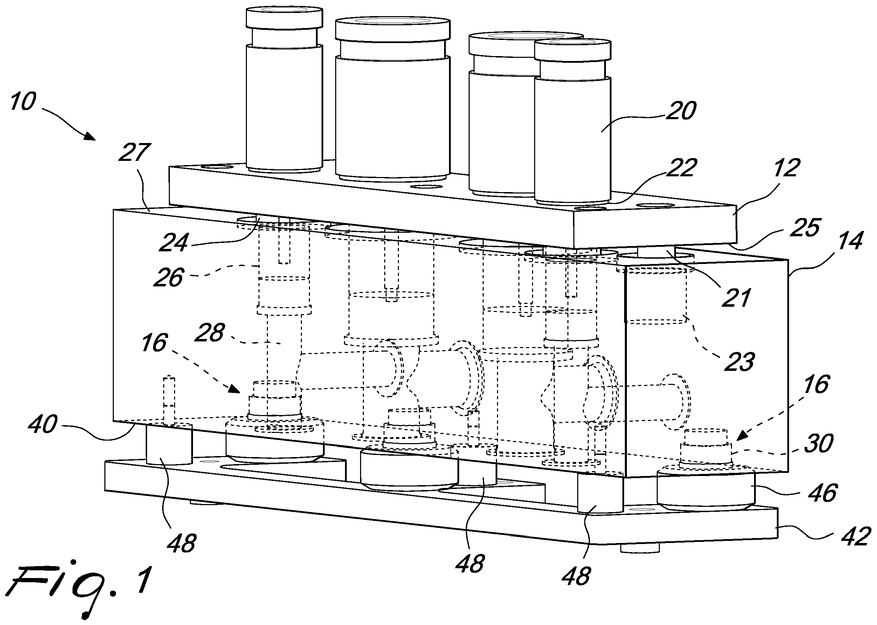

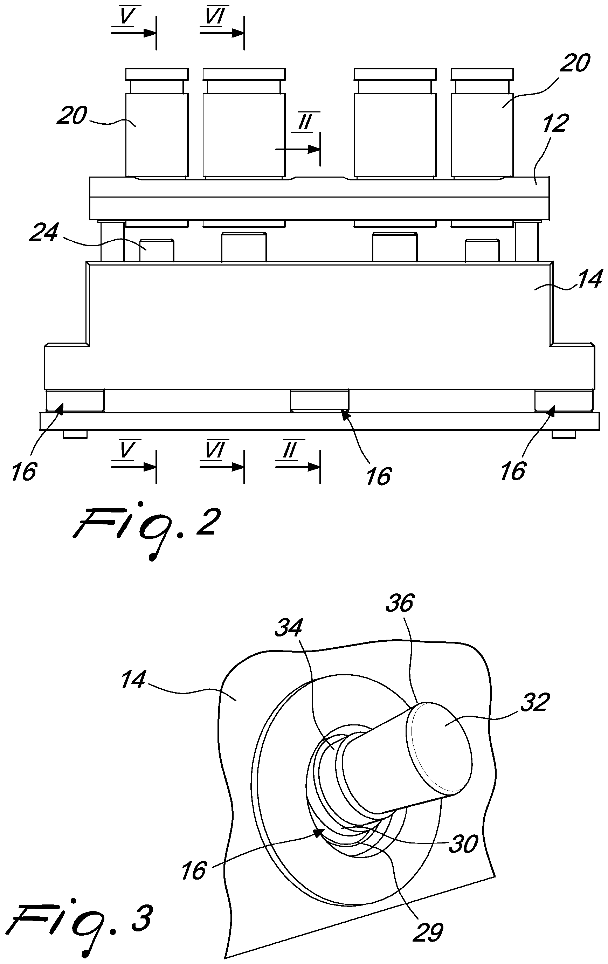

Fig.1 and Fig. 2 show the embodiment of the coupling device **10** wherein the alignment member **12** may be positioned on a side of the bracket **14** and the floating arrangements **16** may be positioned on the opposite side of bracket **14.**

Alignment member **12** may have a suitable form for receiving a connector **20** and for engaging the bracket **14.** The alignment member **12** may be formed as a plate and may include an alignment channel **22.** The alignment channel **22** may extend through alignment member **12.** The openings of alignment channel **22** may be on opposite parallel surfaces of the alignment member **12.** The longitudinal axis of the alignment channel **22** may be perpendicular to the parallel surfaces of alignment member **12** whereon the alignment channel **22** has openings .

A portion of the connector **20** may be accommodated within the alignment channel **22.**

In an alternative embodiment, the alignment member **12** may be formed as a block with alignment channels **22** extending into alignment member **12.** The alignment channels **22** may have openings on a surface of the alignment member **12.** A set of connectors **20** may be substantially or completely accommodated within the alignment channels **22.**

Bracket **14** may have a suitable form for receiving a corresponding connector **24** and for engaging the alignment member **12.** Bracket **14** may be formed as a block and may include a bracket channel **26.** The bracket channel **26** may extend into bracket **14** and may have an opening on a surface of bracket **14.** The longitudinal axis of the bracket channel **26** may be perpendicular to the surface of bracket **14** onto which the bracket channel **26** opens.

The corresponding connector **24** may be substantially or completely accommodated within the bracket channel **26.** Bracket **14** may further include a bracket conduit **28.** The bracket conduit **28** may have an opening on a surface of bracket **14** adjacent to the surface having the bracket channel **26** opening. The bracket conduit **28** may have an additional opening on a surface of bracket **14** opposite and parallel to the surface having the bracket channel **26** opening.

The bracket channel **26** may be contiguous with the bracket conduit **28** and may have a smaller cross section than the bracket conduit **28.** The corresponding connector **24** accommodated within bracket channel **26** may be in communication with the bracket conduit **28.** In an embodiment, the bracket **14** may have a set of bracket channels **26** for accommodating a set of corresponding connectors **24.**

In an alternative embodiment, the bracket **14** may be formed as a plate with bracket channels **26** extending through the bracket **14** and may have openings on opposite parallel surfaces of the bracket **14.** A portion of the corresponding connectors **24** may be accommodated in bracket channels **26.**

Alignment channels **22** and bracket channels **26** may be suitably formed for mating with connectors **20** and corresponding connectors **24.** Channels **22, 26** and connectors **20, 24** may be formed for detachable mating. The longitudinal axis of the alignment channels **22** and the connectors **20** may coincide after mating. The longitudinal axis of the bracket channels **26** and the corresponding connectors **24** may coincide after mating. Channels **22, 26** may have a shape matching the shape of the connectors **20, 24.** In an embodiment, alignment channels **22** and bracket channels **26** may be threaded for mating to correspondingly treaded connectors **20** and corresponding connectors **24.**

Connectors **20** and corresponding connectors **24** may be suitably formed for reciprocal coupling. Connectors **20** and corresponding connectors **24** may be formed for detachable reciprocal coupling. The coupling surfaces of connectors **20** and corresponding connectors **24** may be formed to allow efficient coupling and decoupling in the direction of the longitudinal axes of the connectors **20** and corresponding connectors **24.** In an embodiment the connector **20** may have a male coupling portion while corresponding connector **24** may have a female coupling portion. In an alternative embodiment the connector **20** may have a female coupling portion while corresponding connector **24** may have a male coupling portion.

The fluid connectors are provided integrated into the connectors **20** and corresponding connectors **24.**

In the coupling device **10,** alignment member **12** may abut with bracket **14** and they may be in parallel engagement. In the parallel engagement, the surfaces of alignment member **12,** on which the alignment channel **22** have openings, may be parallel to the surface of bracket **14** on which the bracket channel **26** has an opening. The parallel engagement may be established by reciprocal contact portions on a facing surface **25** of alignment member **12** and a facing surface **27** of bracket **14.** The reciprocal contact portions may retain alignment member **12** and bracket **14** in parallel engagement for coupling of the connectors **20, 24.**

The alignment member **12** may include a set of guiding pins **21.** These guiding pins **21** may enable initial alignment of the alignment member **12** and the bracket **14** for engagement of the alignment member **12** to the bracket **14.** Bushings **23** may be provided in bracket **14.** The guiding pins **21** may enter the bushings **23** to ensure proper alignment of alignment member **12** and bracket **14.**

The floating arrangements **16** are provided on the bracket **14.** The floating arrangements **16** enable radial displacement of bracket **14** along a longitudinal plane thereof. Bracket **14** may be displaced in a direction normal to the longitudinal axis of the corresponding connector **24** mated thereto. During a radial displacement of bracket **14** the angle between the longitudinal axis of the bracket **14** and the longitudinal axis of the corresponding connector **24** remains constant. The magnitude of displacement of bracket **14** and the corresponding connector **24** may be dependent on the floating arrangement **16.**

During engagement of bracket **14** and alignment member **12,** bracket **14** may be displaced radially relative to the mounting surface by the floating arrangements **16.**

In a coupling device **10** when the alignment member **12** is in parallel engagement with bracket **14,** the floating arrangement **16** enable radial displacement of the alignment member **12** along a longitudinal plane thereof. Alignment member **12** may be displaced in a direction normal to the longitudinal axis of the connector **20** mated thereto. During a radial displacement of alignment member **12** the angle between the longitudinal axis of the alignment member **12** and the longitudinal axis of the connector **20** remains constant. The magnitude of displacement of alignment member **12** and the connector **20** may be dependent on the floating arrangements **16** and may be equivalent to the displacement of bracket **14** and the corresponding connector **24.**

The connector **20,** mated to the alignment member **12,** and the corresponding connector **24,** mated to the bracket **14,** may be displaced in the same direction and magnitude as a result of the parallel engagement of the alignment member **12** and the bracket **14.** The matching displacement of the connector **20** and the corresponding connector **24** may ensure alignment of the connectors prior to coupling.

Fig. 3 shows an embodiment of the floating arrangement **16** in the bracket **14.** The floating arrangement **16** may comprise a pivot joint. Bracket **14** has a cavity **29** in which a bearing **30** is be seated. The bearing **30** may be moveable within the cavity **29.**
The cavity **29** may have a suitable shape. A spacer **31** may be provided in the cavity **29** to retain the bearing **30** within the cavity **29.** The bearing **30** may have a shape which may match to the shape of the bearing **30** for movement therein relative to the bracket **14.** The bearing **30** have at least one convex surface which engages with a wall of cavity **29.** The convex surface may be provided by an outer ring of the bearing **30.** Spacer **31** may engage with the outer ring to retain the bearing **30** in the cavity **29.**

Each floating arrangement **16** may also comprise a strut **32** connected to the bearings **30.** Strut **32** may have a saddle **34.** A spring clip **36** may be connected at an end of the strut **32.** The strut **32** may extend through the bearing **30** into the bracket **14.** Saddle **34** and spring clip **36** may maintain the strut **32** in static contact with bearing **30.** The strut **32** may be movable with the bearing **30** relative to the bracket **14.**

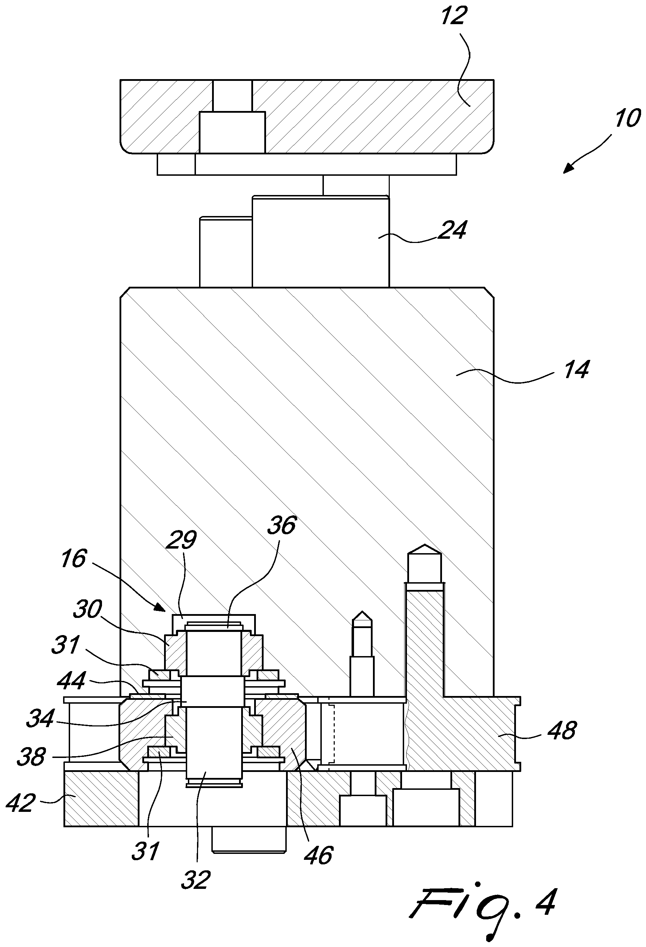

Fig. 4 shows a cross-section of an embodiment of the floating arrangement **16** in the bracket **14.** Each floating arrangement **16** may also comprise an additional bearing **38** connected to the strut **32** at the end opposite to the end connected to bearing **30.** Bearing **38** may be in engagement with saddle **34.** The strut **32** may be movable with the bearing **38.**

The floating arrangement **16** comprises a ball and socket joint. The floating arrangement **16** may be provided by a strut fixedly connected to hemispherical balls at either ends. The cavity **29** of bracket **14** may have a spherical shape to match the shape of the hemispherical ball.

The coupling device **10** has a plurality of floating arrangements **16** spaced on a bearing surface **40** of bracket **14** opposite the surface having opening of bracket channel **26.** The coupling device **10** has at least three floating arrangements **16** staggered along the bearing surface **40.** In an alternative embodiment, the coupling device **10** may have at least four floating arrangements **16** positioned in pairs at opposite ends of the bearing surface **40.** The pairs of the floating arrangements **16** may be spaced apart. The four floating arrangements **16** may be positioned adjacent four corners of bearing surface **40.**

The bracket **14** is mounted on a mounting surface through the floating arrangements **16.** Bearing surface **40** of bracket **14** may be parallel to the mounting surface. The floating arrangements **16** enables radial displacement of bracket **14** along a longitudinal plane thereof relative to the mounting surface. During a radial displacement of bracket **14** the bearing surface **40,** facing surface **27** and the mounting surface remain parallel.

During engagement of bracket **14** and alignment member **12,** bracket **14** may be displaced radially relative to the mounting surface by the floating arrangements **16.** During a radial displacement of bracket **14** the bearing surface **40,** facing surface **27** and the mounting surface remain parallel.

In a coupling device **10** wherein the alignment member **12** is in parallel engagement with bracket **14,** the floating arrangements **16** enables radial displacement of the alignment member **12** along a longitudinal plane thereof relative to the mounting surface. During a radial displacement of alignment member **12** the facing surface **25** of alignment member **12** and the mounting surface remain parallel.

Bearings **38** may be seated at the mounting surface for movement of alignment member **12** and bracket **14** relative to the mounting surface.

In an embodiment, the mounting surface may have a plurality of collars **46** for coupling to each floating arrangement **16.** Each collar **46** may have a suitably shaped cavity. Bearing **38** may be seated within the cavity of the collar **46** such that bearing **38** may be moveable within the collar **46.** A spacer **31** may be provided in the cavity to retain the bearing **38.** The spacer **31** and the saddle **34** may maintain the strut **32** in static contact with bearing **38.** The bearing **38** may have a shape which may match to the shape of the cavity of collar **46.** The bearing **38** may have at least one convex surface which engages with a wall of the cavity of collar **46.** The convex surface may be provided by an outer ring of the bearing **38.** Spacer **31** may engage with the outer ring to retain the bearing **38** in the cavity of collar **46.**

In an alternative embodiment, the mounting surface may have a plurality of cavities for coupling to each floating arrangement **16.** Bearing **38** may be seated within the cavity of the collar **46** such that bearing **38** may be moveable within the cavity. The bearing **38** may have a shape which may match to the shape of the cavity.

The mounting surface is a mounting platform **42.** In an alternative embodiment, the coupling device **10** may further comprise the mounting platform **42.**

The coupling device **10** may comprise a flange **44** positioned around the cavity **29** of bracket **14.** The flange **44** may abut the collar **46** provided on a mounting surface such as the mounting platform **42.** Flange **44** with the collar **46** may bear the axial load produced during coupling of the connector **20** and corresponding connector **24.** Flange **44** may divert the axial load from the bracket **14** into mounting platform **42** through collar **46.** An axial load may also be induced during operation of the fluid connectors **20, 24.** The flange **44** may be coated with a low friction PTFE based coating. The coating may facilitate radial displacement of bracket **14** under high axial loads.

The coupling device **10** may further include energising elements **48** positioned between the bracket **14** and a mounting surface such as the mounting platform **42.** Energising elements **48** may be positioned in tandem with each floating arrangement **16.** In an embodiment, the energising elements **48** may be resilient bodies. The energising elements **48** may return the bracket **14** to a neutral position after disengagement with the alignment member **12.** The energising elements **48** may return the bracket **14** to the neutral position after uncoupling of the connector **20** and corresponding connector **24.** The resilient bodies may be composed of rubber. The neutral position of bracket **14** may be the position prior to engagement with alignment member **12** or prior to coupling of connectors **20, 24.**

The connectors **20, 24** are for connection of fluid cables such as hydraulic lines / hoses or non-fluid cables such as electric cables.

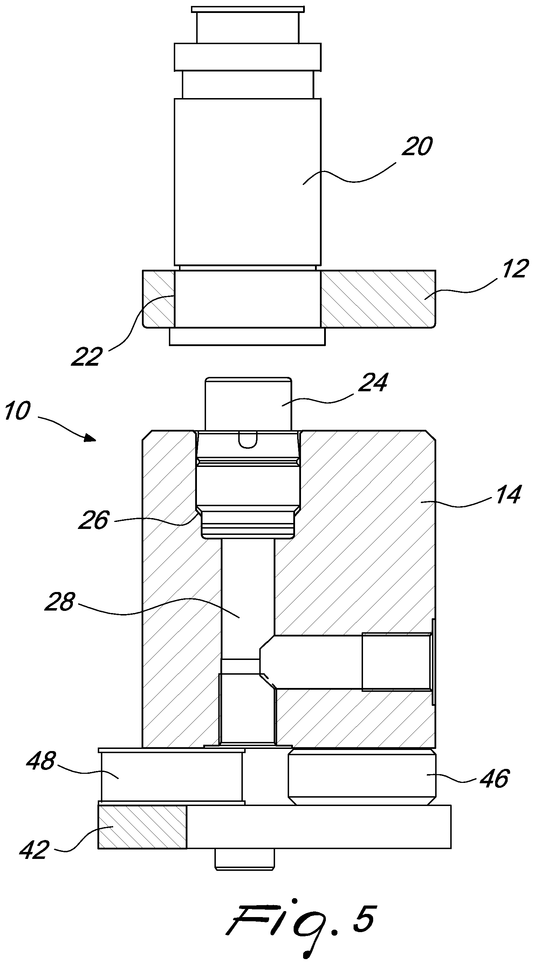

Fig. 4 and Fig 5 show a cross-section an embodiment of the coupling device **10** with the connector **20** mated to alignment channel **22** and corresponding connector **24** mated to bracket channel **26.** The coupling device **10** couples a connector **20** and a corresponding connector **24.** The bracket **14** is mounted to a mounting surface. The mounting surface is a mounting platform **42** positioned on a worktool. In an alternative embodiment, the bracket **14** may be mounted to the mounting platform **42** and positioned on a worktool as a single connected part.

A plurality of floating arrangements **16** extends from the bracket **14** and is coupled to the mounting surface. The mounting surface is configured to receive the floating arrangements **16.** The bearing surface **40** of the bracket **14** may be parallel to the mounting surface or mounting platform **42.**

At the facing surface **27** of the bracket **14,** which is opposite and parallel to the bearing surface **40,** a corresponding connector **24** may be mated to the bracket channel **26.**

The alignment member **12** may be engaged to the bracket **14** such that the facing surface **25** of the alignment member **12** may be parallel to the facing surface **27** of the bracket **14.** The guiding pins **21** and bushings **23** may align the alignment member **12** relative to the bracket **14** prior to engagement of the alignment member **12** to the bracket **14.** In this engagement, a radial displacement of the bracket **14** may be mirrored by the alignment member **12** while facing surfaces **25, 27** may remain parallel. Thereafter, the connectors **20, 24** may be coupled.

The connector **20** and the corresponding connector **24** may be moved in the axial direction to form a continuous communication between the connectors. The fluid connectors integrated in the connectors **20, 24** may also be coupled upon coupling of the connectors.

The axial coupling load may be borne by the flanges **44** through abutment with the collars **46.** The energising elements **48** may bring the coupling device **10** to the neutral position upon any change in position due to the engagement of alignment member **12** and bracket **14** or coupling of the connectors **20, 24.**

The skilled person would appreciate that foregoing embodiments may be modified to obtain the apparatus of the present disclosure without departing from the scope of the claims.

### Industrial Applicability

This disclosure describes a coupling device **10** for coupling connectors.

For operation of vehicles such as excavators, cables carrying hydraulic fluid may need to be connected at certain points on the vehicles. The coupling device **10** may be positioned on the vehicle to enable proper alignment of hydraulic fluid cable connectors prior to coupling. The coupling device **10** may be used with an excavator quickcoupler cartridge. Such alignment is critical to ensure a leak free connection and longevity of the cable connectors.

The coupling device **10** may also be used to couple electrical connectors or pneumatic connectors for operation of vehicles.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the scope of the claims. The foregoing embodiments are therefore to be considered in all respects illustrative rather than limiting of the disclosure described herein. Scope of the invention is thus indicated by the appended claims, rather than the foregoing description, and all changes that come within the meaning of the claims are therefore intended to be embraced therein.

## Claims

1. A coupling device (10) for coupling a first and a second fluid connectors (20, 24) in machines, the coupling device (10) comprising:
a first connector (20) having an integrated fluid connector;
a second connector (24) having an integrated fluid connector;
a first support member (12) for supporting the first connector (20);
a second support member (14) for supporting the second corresponding connector (24); and
a mounting platform (42);
wherein the first and the second support members (12, 14) are arranged for axial coupling of said first and second integrated fluid connectors, wherein at least three floating arrangements (16) are provided on the second support member (14) and enable mutual radial displacement of the first and second support members (12, 14), wherein each floating arrangement (16) is a bearing arrangement, wherein each bearing (30, 38) has at least one convex surface, wherein the second support member (14) is mounted to the mounting platform (42), wherein the floating arrangements (16) are positioned between the mounting platform (42) and the second support member (14) and wherein each floating arrangement (16) is a ball and socket joint.

2. The coupling device of claim 1 wherein the bearing arrangement comprises a strut (32) carrying a pair of bearings (30, 38).

3. The coupling device of claim 1 wherein a plurality of collars (46) are disposed on the mounting platform (42) for coupling to an end of the floating arrangements (16).

4. The coupling device of claim 3 further comprising a plurality of flanges (44) positioned between the collars (46) and the second support member (14).

5. The coupling device of any one of claims 1 to 4 further comprising energising elements (48) mounted between the mounting platform (42) and the support member.

6. The coupling device of claim 5 wherein the energising elements (48) are composed of resilient material.

7. The coupling device of any of one claims 1 to 6 wherein there are at least four floating arrangements (16).

8. A method of coupling fluid connectors in machines using a coupling device according to any of the previous claims, the method comprising the steps of:
providing a second support member (14) with at least three floating arrangements (16), wherein the at least three floating arrangements (16) enable mutual radial displacement of a first and the second support members, wherein each floating arrangement (16) is a bearing arrangement and wherein each bearing (30, 38) has at least one convex surface;
coupling a mounting platform (42) to the second support member (14) wherein the floating arrangements (16) are positioned between the mounting platform (42) and said support member and wherein each floating arrangement (16) is a ball and socket joint;
engaging the first support member (12) supporting a first integrated fluid connector to the second support member (14) supporting a second integrated fluid corresponding connector for axial coupling of said first and second integrated fluid connectors; and
coupling the first and second integrated fluid connectors.

## Patentansprüche

1. Kopplungsvorrichtung (10) zum Koppeln eines ersten und eines zweiten Fluidverbinders (20, 24) in Maschinen, die Kopplungsvorrichtung (10) umfassend:
einen ersten Verbinder (20), der einen integrierten Fluidverbinder aufweist;
einen zweiten Verbinder (24), der einen integrierten Fluidverbinder aufweist;
ein erstes Stützglied (12) zum Stützen des ersten Verbinders (20);
ein zweites Stützglied (14) zum Stützen des zweiten entsprechenden Verbinders (24); und
eine Montageplattform (42);
wobei die ersten und die zweiten Stützglieder (12, 14) zur axialen Kopplung der ersten und zweiten integrierten Fluidverbinder angeordnet sind, wobei mindestens drei Schwimmanordnungen (16) an dem zweiten Stützglied (14) bereitgestellt sind und gegenseitige radiale Verlagerung der ersten und zweiten Stützglieder (12, 14) ermöglichen, wobei jede Schwimmanordnung (16) eine Lageranordnung ist, wobei jedes Lager (30, 38) mindestens eine konvexe Oberfläche aufweist, wobei das zweite Stützglied (14) an der Montageplattform (42) montiert ist, wobei die Schwimmanordnungen (16) zwischen der Montageplattform (42) und dem zweiten Stützglied (14) angeordnet sind und wobei jede Schwimmanordnung (16) ein Kugelgelenk ist.

2. Kopplungsvorrichtung nach Anspruch 1, wobei die Lageranordnung eine Strebe (32) umfasst, die ein Paar von Lagern (30, 38) trägt.

3. Kopplungsvorrichtung nach Anspruch 1, wobei eine Vielzahl von Kragen (46) auf der Montageplattform (42) zum Koppeln an ein Ende der Schwimmanordnungen (16) angeordnet ist.

4. Kopplungsvorrichtung nach Anspruch 3, weiter umfassend eine Vielzahl von Flanschen (44), die zwischen den Kragen (46) und dem zweiten Stützglied (14) positioniert ist.

5. Kopplungsvorrichtung nach einem der Ansprüche 1 bis 4, weiter umfassend Energetisierelemente (48), die zwischen der Montageplattform (42) und dem Stützglied montiert sind.

6. Kopplungsvorrichtung nach Anspruch 5, wobei die Energetisierelemente (48) aus federndem Material zusammengesetzt sind.

7. Kopplungsvorrichtung nach einem der Ansprüche 1 bis 6, wobei darin mindestens vier Schwimmanordnungen (16) vorhanden sind.

8. Verfahren eines Koppelns von Fluidverbindern in Maschinen, das eine Kopplungsvorrichtung nach einem der vorstehenden Ansprüche verwendet, das Verfahren umfassend die Schritte:
Bereitstellen eines zweiten Stützglieds (14) mit mindestens drei Schwimmanordnungen (16), wobei die mindestens drei Schwimmanordnungen (16) gegenseitige radiale Verlagerung eines ersten und des zweiten Stützglieds ermöglichen, wobei jede Schwimmanordnung (16) eine Lageranordnung ist und wobei jedes Lager (30, 38) mindestens eine konvexe Oberfläche aufweist;
Koppeln einer Montageplattform (42) an das zweite Stützglied (14), wobei die Schwimmanordnungen (16) zwischen der Montageplattform (42) und dem Stützglied angeordnet sind und wobei jede Schwimmanordnung (16) ein Kugelgelenk ist;
Eingreifen lassen des ersten Stützglieds (12), das einen ersten integrierten Fluidverbinder stützt, in das zweite Stützglied (14), das einen zweiten entsprechenden integrierten Fluidverbinder stützt, zum axialen Koppeln der ersten und zweiten integrierten Fluidverbinder; und
Koppeln der ersten und zweiten integrierten Fluidverbinder.

## Revendications

1. Dispositif de couplage (10) pour coupler des premier et deuxième connecteurs de fluide (20, 24) dans des machines, le dispositif de couplage (10) comprenant :
un premier connecteur (20) comportant un connecteur de fluide intégré ;
un deuxième connecteur (24) comportant un connecteur de fluide intégré ;
un premier organe de soutien (12) pour soutenir le premier connecteur (20) ;
un deuxième organe de soutien (14) pour soutenir le deuxième connecteur correspondant (24) ; et
une plate-forme de montage (42) ;
dans lequel les premier et deuxième organes de soutien (12, 14) sont agencés pour un couplage axial desdits premier et deuxième connecteurs de fluide intégrés, dans lequel au moins trois agencements flottants (16) sont prévus sur le deuxième organe de soutien (14) et permettent un déplacement radial réciproque des premier et deuxième organes de soutien (12, 14), dans lequel chaque agencement flottant (16) est un agencement de paliers, dans lequel chaque palier (30, 38) comporte au moins une surface convexe, dans lequel le deuxième organe de soutien (14) est monté sur la plate-forme de montage (42), dans lequel les agencements flottants (16) sont positionnés entre la plate-forme de montage (42) et le deuxième organe de soutien (14) et dans lequel chaque agencement flottant (16) est une articulation à rotule.

2. Dispositif de couplage selon la revendication 1 dans lequel l'agencement de paliers comprend un support (32) portant une paire de paliers (30, 38).

3. Dispositif de couplage selon la revendication 1 dans lequel une pluralité de colliers (46) sont disposés sur la plate-forme de montage (42) pour se coupler à une extrémité des agencements flottants (16).

4. Dispositif de couplage selon la revendication 3 comprenant en outre une pluralité de brides (44) positionnées entre les colliers (46) et le deuxième organe de soutien (14).

5. Dispositif de couplage selon l'une quelconque des revendications 1 à 4 comprenant en outre des éléments de mise sous tension (48) montés entre la plate-forme de montage (42) et l'organe de soutien.

6. Dispositif de couplage selon la revendication 5 dans lequel les éléments de mise sous tension (48) sont composés d'un matériau élastique.

7. Dispositif de couplage selon l'une quelconque des revendications 1 à 6 dans lequel il y a au moins quatre agencements flottants (16).

8. Procédé de couplage de connecteurs de fluide dans des machines en utilisant un dispositif de couplage selon l'une quelconque des revendications précédentes, le procédé comprenant les étapes de :
la fourniture, à un deuxième organe de soutien (14), d'au moins trois agencements flottants (16), dans lequel les au moins trois agencements flottants (16) permettent un déplacement radial réciproque d'un premier organe de soutien et du deuxième organe de soutien, dans lequel chaque agencement flottant (16) est un agencement de paliers et dans lequel chaque palier (30, 38) comporte au moins une surface convexe ;
le couplage d'une plate-forme de montage (42) au deuxième organe de soutien (14), dans lequel les agencements flottants (16) sont positionnés entre la plate-forme de montage (42) et ledit organe de soutien et dans lequel chaque agencement flottant (16) est une articulation à rotule ;
la mise en prise du premier organe de soutien (12) soutenant un premier connecteur de fluide intégré avec le deuxième organe de soutien (14) soutenant un deuxième connecteur de fluide intégré correspondant pour un couplage axial desdits premier et deuxième connecteurs de fluide intégrés ; et
le couplage des premier et deuxième connecteurs de fluide intégrés.
